Europäisches Patentamt

European Patent Office

Office européen des brevets

(11) Veröffentlichungsnummer: **0 515 955 A2**

# (12) EUROPÄISCHE PATENTANMELDUNG

(21) Anmeldenummer: **92108447.1**

(22) Anmeldetag: **19.05.92**

(51) Int. Cl.5: **G01N 30/56**

(30) Priorität: **29.05.91 DE 4117604**

(43) Veröffentlichungstag der Anmeldung:
**02.12.92 Patentblatt 92/49**

(84) Benannte Vertragsstaaten:
**BE CH DE DK FR GB IT LI NL SE**

(71) Anmelder: **MERCK PATENT GESELLSCHAFT MIT BESCHRÄNKTER HAFTUNG**
**Frankfurter Strasse 250 Postfach 4119**
**W-6100 Darmstadt(DE)**

(72) Erfinder: **Münch, Gerhard**
**Ostring 9**
**W-6114 Gross Umstadt(DE)**

Erfinder: **Rogler, Ernst, Dr.**
**Vor der Grube 9**
**W-6108 Weiterstadt 1(DE)**
Erfinder: **Kreher, Klaus**
**Bahnhofsplatz 22**
**W-6115 Münster(DE)**
Erfinder: **Reichert, Klaus, Dr.**
**Heinrichstrasse 24**
**W-8120 Weilheim(DE)**
Erfinder: **Hauke, Günter**
**Im Seegraben 11**
**W-6109 Mühtal-Traisa(DE)**
Erfinder: **Gunkel, Werner**
**Wingertsweg 33**
**W-6101 Rossdorf(DE)**

(54) Verfahren und Vorrichtung zur Befüllung von Chromatographiesäulen.

(57) Die Erfindung betrifft ein Verfahren zur Naßbefüllung von Chromatographiesäulen, wobei das Sorbensmaterial, in einem Eluenten suspendiert, kontinuierlich in die Säule eingebracht und durch eine Druckfiltration verdichtet wird.

Fig. 3

Die Erfindung betrifft ein Verfahren zur Naßbefüllung von Chromatographiesäulen, wobei das Sorbens in einem Eluenten suspendiert in die Säule eingebracht und durch Druckfiltration verdichtet wird, sowie eine Vorrichtung zur Durchführung dieses Verfahrens.

Üblicherweise wird die Chromatographiesäule an einem Ende mit einer ein Filterelement enthaltenden Auslaßvorrichtung verschlossen und über ein am anderen Ende aufgesetztes Füllrohr mit einer im allgemeinen hochviskosen Suspension des Sorbens in einem Eluenten gefüllt. Zur Erzeugung einer dichten Säulenpackung wird auf die in Säule und Füllrohr befindliche Sorbenssuspension Druck ausgeübt, der zum Beispiel durch Bewegung eines Kolbens (BE 897,865 und DE 24 09 935), durch Gasdruck (PL 110,372) oder insbesondere durch Druckfiltration (EP 0 105 583) erzeugt wird. Beim letztgenannten Vorgang erfolgt die Verdichtung des Sorbensmaterials durch Förderung des Eluenten mit Hilfe einer Pumpe durch das Füllrohr und die Säule.

Bei diesen Füllverfahren werden jedoch häufig nicht ausreichend homogene Säulenpackungen mit nur unzureichend reproduzierbaren Trenneigenschaften erhalten, da das Sorbensmaterial zu Beginn des Füllprozesses sedimentiert und dabei eine unterschiedliche Größenverteilung des Sorbens über die Säulenlänge erhalten wird. Besonders bei Verfahren, bei denen die Säulenfüllung durch einen Kolben verdichtet wird, wird die Sorbenssuspension mit hoher Dichte eingesetzt. Auch bei den Druckfiltrationsverfahren ist dies wegen des begrenzten Füllrohrvolumens notwendig. Zur Verringerung der Sedimentationsneigung müssen hochviskose, dichte und häufig toxische Lösungsmittel benutzt werden (Balanced Density Method). Bei bisher bekannten Packungsmethoden mittels Druckfiltration ist eine zusätzliche mechanische Verpressung des Säulenbettes nicht möglich. Damit ist die Stabilität des Säulenbettes eingeschränkt. Diese Füllverfahren sind insbesondere bei großen Säulen mit Feinkornmaterial und hoher Packungslänge im allgemeinen nicht anwendbar.

Wegen der immensen Bedeutung der Chromatographie für analytische und besonders auch für präparative Anwendungen bestand daher ein dringendes Bedürfnis für ein verbessertes Verfahren zur Naßbefüllung von Chromatographiesäulen, das die oben angeführten Nachteile herkömmlicher Verfahren nicht aufweist. Wünschenswert wäre weiterhin eine kompakte Vorrichtung für ein derartiges Verfahren, so daß die Füll- und die Separationseinrichtung kombiniert werden können.

Der Erfindung lag die Aufgabe zugrunde, ein derartiges Verfahren zu finden, wobei das Sorbens in einem Eluenten suspendiert in die Säule eingebracht und durch Druckfiltration verdichtet wird.

Weiterhin lag der Erfindung die Aufgabe zugrunde, eine Vorrichtung für ein derartiges Verfahren bereitzustellen.

Diese Aufgabe kann überraschenderweise durch die Bereitstellung des erfindungsgemäßen Verfahrens und der erfindungsgemäßen Einrichtung zur Durchführung dieses Verfahrens gelöst werden.

Gegenstand der Erfindung ist somit ein Verfahren zur Naßbefüllung von Chromatographiesäulen, wobei das Sorbens, in einem Eluenten suspendiert, kontinuierlich in die Säule eingebracht und durch Druckfiltration verdichtet wird. Dabei wird die Suspensionsdichte der Sorbenssuspension durch Zudosieren des Eluenten variiert.

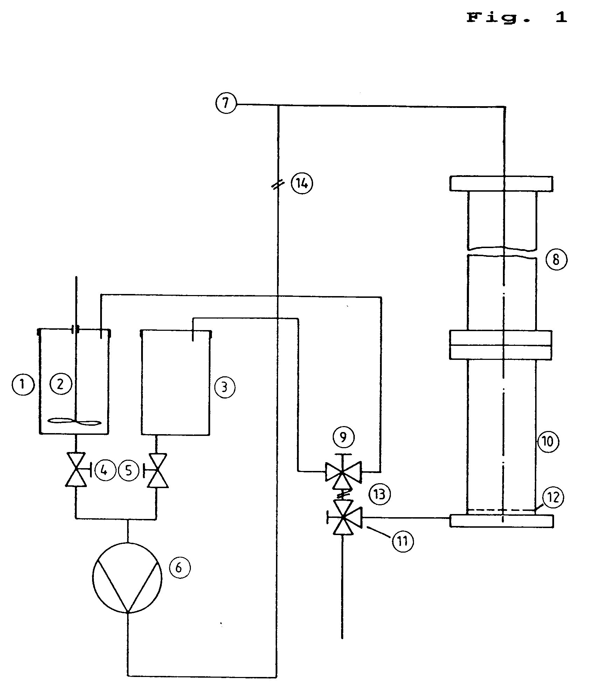

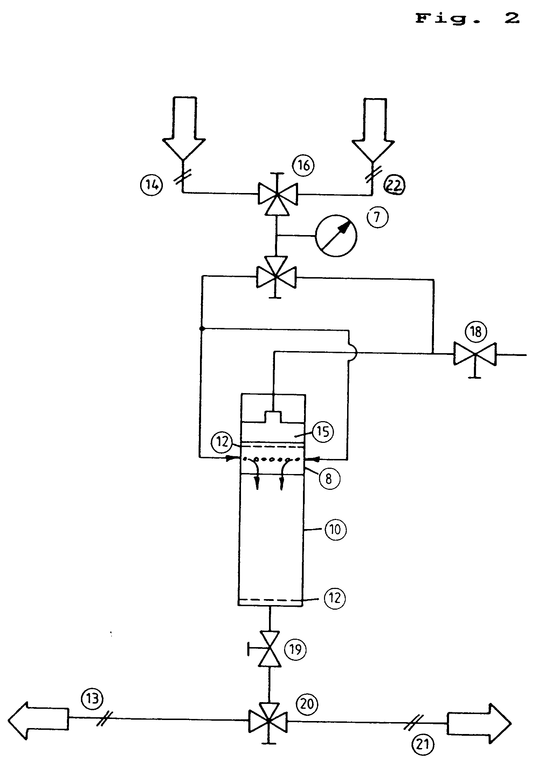

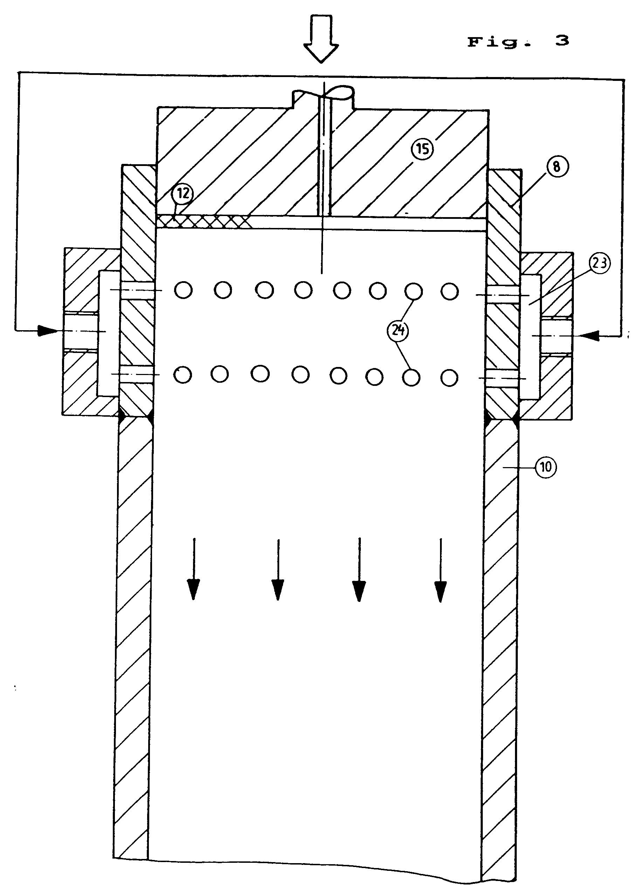

Figur 1 stellt schematisch eine erfindungsgemäße Vorrichtung zum Naßbefüllen von Chromatographiesäulen dar. In Figur 2 ist eine bevorzugte Ausführungsform, bei der das Füllrohr periphere Öffnungen besitzt, schematisch dargestellt; einige Teile der Vorrichtung, die identisch bereits in Figur 1 dargestellt sind, wurden nicht nochmals dargestellt. Figur 3 ist ein detailliertes Schema von Füllrohr mit peripheren Öffnungen, Säulenkopf und Kompressionskolben.

Das erfindungsgemäße Verfahren wird in einer Vorrichtung nach Figur 1 folgendermaßen ausgeführt: In einer Vorlage (1) wird die Sorbenssuspension mittels einer Rührvorrichtung (2) in Suspension gehalten. Dabei wird die Dichte der Sorbenssuspension, die als Quotient aus der Sorbensmenge in g und dem Volumen des Eluenten oder der Suspension in ml definiert ist, eingestellt. Statt eines Rührers (2) können ähnliche Vorrichtungen, wie z.B. ein Ultraschallhomogenisator, zur vollständigen Homogenisierung der Suspension vorgesehen werden. Die Suspensionsdichte, wie sie der Säule (10) zugeführt wird, kann durch Zumischung von Elutionsmittel aus der Vorlage (3) verringert werden. Die Einstellungen der beiden Ventile (4) und (5) bestimmen dabei das Verdünnungsverhältnis. Die Pumpe (6) führt die eingestellte Sorbenssuspension der Säule (10) zu: entweder direkt oder bevorzugt über das Füllrohr (8), das auf der Säule (10) befestigt ist. Dabei kann der Arbeitsdruck mittels des Manometers (7) gemessen werden. Das Sorbens sammelt sich in der Chromatographiesäule (10) oberhalb der Fritteneinrichtung (12) an deren unteren Ende. In einer bevorzugten Verfahrensweise wird das Elutionsmittel über die Ventile (11) und (9) in die Gefäße (1) und/oder (2) zurückgeführt.

Nach dem erfindungsgemäßen Verfahren können alle für die Chromatographie verwendbaren festen Sorbentien verfüllt werden. Als Beispiele seien Kieselgele in modifizierter und nicht modifizierter Form, Aluminiumoxid und Polymerträger genannt. Da die Suspensionsdichte in einem weiten Bereich variiert werden kann, können Sorbensmaterialien unterschiedlichster Korngröße eingesetzt werden. Die Korngröße liegt bevorzugt zwischen 1 μm und 500 μm, ganz besonders jedoch zwischen 2 μm und 300 μm.

Als Sorbenssuspensionsflüssigkeiten oder Eluenten können alle geeigneten wäßrigen und nicht wäßrigen Lösungsmittel oder Lösungsmittelgemische eingesetzt werden, von denen hier nur die wichtigsten beispielhaft genannt seien: Methanol, Ethanol, Propanol, Butanol, Octanol, Cyclohexanol, Ethylenglykol, Diethylenglykol, Diethylether, Dibutylether, Anisol, Dioxan, Tetrahydrofuran, Mono-, Di-, Tri-, Polyethylenglykolether, Aceton, Butanon, Cyclohexanon, Essigsäureethylester, Glykolester, Dimethylformamid, Pyridin, N-Methylpyrrolidon, Acetonitril, Schwefelkohlenstoff, Dimethylsulfoxid, Sulfolan, Nitrobenzol, Methylenchlorid, Chloroform, Tetrachlormethan, Tri-, Perchlorethylen, Ethylenchlorid, Chlorfluorkohlenstoffe, Benzine, Cyclohexan, Methylcyclohexan, Decalin, Benzol, Toluol und/oder Xylol. Dabei werden nicht-toxische Lösungsmittel mit hohem Flammpunkt bevorzugt; die Auswahl geeigneter Lösungsmittel ist, verglichen zu Verfahren nach dem Stand der Technik, nur in geringem Umfang durch Dichte und Viskosität eingeschränkt. Die Verwendung teurer und toxischer Lösungsmittel kann somit häufig unterbleiben, da die Sorbenssuspensionsdichte variabel ist und der Art und insbesondere der Korngröße des Sorbensmaterials angepaßt werden kann. Die Dichte der Sorbenssuspension beträgt bevorzugt zwischen $10^{-3}$ g/ml und $7,5 \times 10^{-1}$ g/ml.

Zur Förderung der Sorbenssuspension und des Eluenten können in der chemischen Verfahrenstechnik üblicherweise eingesetzte Pumpen, wie zum Beispiel Kreiselpumpen, Schneckenpumpen oder Verdrängerpumpen verwendet werden. Die Sorbenssuspension wird bevorzugt bei erhöhten Drücken von bis zu 900 bar in die Chromatographiesäule (10) eingebracht. Die Dosiergeschwindigkeit wird zweckmäßigerweise an die Größe der zu befüllenden Säule angepaßt und hängt von der Korngröße des eingesetzten Füllmaterials ab. Die Dosiergeschwindigkeit, angegeben als lineare Fließgeschwindigkeit, liegt bevorzugt zwischen 1 und 200 cm/min, insbesondere jedoch zwischen 10 und 40 cm/min.

Gegenstand der Erfindung ist weiterhin eine Vorrichtung zur Naßbefüllung von Chromatographiesäulen durch Druckfiltration der Sorbenssuspension zumindestens enthaltend:
- eine Vorlage für die Sorbenssuspension (1),
- ein Dosierventil (4) zur Regulierung des Suspensionsstroms
- eine Vorlage für Elutionsmittel (3)
- ein Dosierventil (5) zur Regulierung des Elutionsmittelstroms

und

- eine Pumpe (6) zur Einbringung der Suspension in die zu befüllende Chromatographiesäule (10) mit Filterelementen (12).

Bevorzugt ist eine Vorrichtung, die zusätzlich enthält:
- ein auf die Chromatographiesäule (10) aufgesetztes Füllrohr (8),
- ein Manometer (7) zur Messung des bei der Druckfiltration zur Verdichtung des Sorbensmaterials ausgeübten Drucks
- weitere dem Fachmann bekannte Meßeinrichtungen, z.B. für den Durchfluß, und
- Dosierventile (9) und (11) zur Regulierung und Leitung des aus der Säule (10) austretenden Eluentenflusses.

Besonders bevorzugt und in sich selbst erfinderisch ist eine Vorrichtung, bei der das Füllrohr (8) in spezieller Weise ausgeführt ist (siehe Fig. 3), so daß die Sorbenssuspension mittels einer peripheren Ringleitung (23) durch peripher angeordnete Öffnungen (24) in das Füllrohr eingebracht werden kann. In weiterer Ausgestaltung dieser besonders bevorzugten Ausführungsform sind zusätzlich vorhanden:
- ein Kompressionskolben (15) mit Antriebsvorrichtung,
- Verbindungsleitungen und Ventile (16) und (20), die es erlauben, chromatographische Trennungen durchzuführen, ohne die Säule aus dem Füllstand entfernen zu müssen.

Die Säule (10) und das Füllrohr (8) können fest miteinander verbunden sein oder im wesentlichen aus einem Stück gefertigt sein.

Gegenstand der Erfindung sind weiterhin Chromatographiesäulen, befüllt nach mindestens einem der erfindungsgemäßen Verfahren.

In Figur 1, auf die bei der folgenden Erläuterung des erfindungsgemäßen Verfahrens Bezug genommen wird, ist eine bevorzugte Ausgestaltung der erfindungsgemäßen Vorrichtung gezeigt.

Die aus der Sorbenssuspensionsvorlage (1) über das Ventil (4) austretende Sorbenssuspension kann bei geschlossenem Ventil (5) mit Hilfe der Pumpe (6) über das Füllrohr (8) mit der in der Sorbenssuspensionsvorlage (1) eingestellten Dichte in die Chromatographiesäule (10) eingebracht werden. Die Dichte der Suspension kann aber auch geändert werden, indem der Sorbenssuspension durch Öffnen des Ventils (5) Eluent zugemischt wird. Weitere Einrichtungen, um zwei Flüssigkeitsströme in einstellbarem Mischungsverhältnis zu mischen, sind dem Fachmann bekannt; z.B. kann jeder der beiden Vorlagen (1) und (2) jeweils eine eigene Förderpumpe zugeordnet werden, die ihre jeweilige Flüssigkeit gegebenenfalls über eine Mischkammer in das Füllrohr (8) oder direkt in die Säule (10) fördern. Suspension und Eluent werden insbesondere vor Eintritt in die Mischungszone durch feinmaschige Drahtnetze oder ähnliche Strömungshindernisse geleitet, wodurch eine zusätzliche Verwirbelung und eine hohe Homogenität der resultierenden Sorbenssuspension erzielt wird.

Die in der Vorlage (1) eingestellte Sorbenssuspensionsdichte kann durch die Zumischung von Eluent in einem weiten Bereich variiert werden. Dabei kann der zugemischte Eluent mit dem in Vorlage (1) verwendeten identisch oder verschieden sein.

Vor dem Eintritt in das Füllrohr (8) weist die Sorbenssuspension bevorzugt Dichten auf, die zwischen $10^{-3}$ g/ml und $7.5 \times 10^{-1}$ g/ml, insbesondere jedoch zwischen $1 \times 10^{-2}$ g/ml und $2,5 \times 10^{-1}$ g/ml liegen. Durch eine kontinuierliche Erhöhung der zugemischten Eluentenmenge können jedoch Sorbenssuspensionsdichtegradienten eingestellt werden, was für manche Trennanwendungen vorteilhaft sein kann.

Die für die Einstellung der gewünschten Sorbenssuspensionsdichten erforderlichen Regelprozesse sind vorzugsweise automatisiert. Dabei wird das pro Zeiteinheit geförderte Eluenten- bzw. Sorbenssuspensionvolumen gemessen und mit einem vorgegebenen Sollwert verglichen; der dabei erhaltenen Differenz wird durch Regeln der Ventile (4) und (5) gegengesteuert.

Durch den kontinuierlichen und automatisierbaren Füllprozess werden homogenere Packungsdichten als bei herkömmlichen Füllverfahren erreicht und die Qualität der Säulenpackungen ist in hohem Maße reproduzierbar.

Im Unterschied zu herkömmlichen Füllverfahren kann das Lösungsmittel nach Durchströmen der Säule (10) über die Ventile (11) und (9) in die Eluentenvorlage (3) bzw. die Sorbenssuspensionsvorlage (1) zurückgeführt werden. Dadurch kann der Lösungsmittelverbrauch erheblich reduziert werden.

Nach der Verdichtung des Sorbensmaterials erfolgt die Befüllung der Chromatographiesäule (10) unter einem vorgegebenen Druck, der von dem zugelassenen Maximaldruck der zu füllenden Säule (10) und der Leistungsfähigkeit der eingesetzten Pumpe (6) abhängt. Üblicherweise werden Drücke bis etwa 900 bar verwendet.

In Figur 2, auf die bei der folgenden Erläuterung von besonders bevorzugten Varianten des erfindungsgemäßen Verfahrens Bezug genommen wird, ist eine derartige besonders bevorzugte erfindungsgemäße Vorrichtung gezeigt. Figur 3 zeigt entsprechende Details des oberen Säulenkopfes mit Füllrohr und Kompressionskolben. In dieser Vorrichtung weist das Füllrohr (8) eine spezielle Konstruktion auf: Er besitzt einen peripheren Kanal (23) für das Sorbens, von dem Öffnungen (24) in das Innere des Füllringes ausgehen. Weiterhin ist, wie beispielhaft aus Figur 3 ersichtlich, das untere Ende des Füllrohres in einer Weise geformt, die es erlaubt, ihn mit der Säule so zu verbinden, daß innen ein glatter Übergang zwischen beiden Teilen besteht. Im übrigen sind hinter den Schnittstellen (13) und (14) die grundlegenden Bauelemente, wie bereits aus Fig. 1 bekannt, vorhanden: Vorlage (1) für Sorbens mit Rühreinrichtung (2) und Ventil (4), sowie Vorlage (3) für Eluent mit Ventil (5), sowie die Pumpe (6) und das Ventil (9).

Im folgenden wird das Füllen einer Säule unter Benutzung des besonders bevorzugten Verfahrens dargestellt: Der Kompressionskolben (15) wird in die in Figur 3 ersichtliche Position bewegt. Aus Vorlage (3) wird die Säule zunächst mit Eluent gefüllt; Ventil (18) ist dabei geöffnet, Ventil (19) geschlossen. Anschließend wird die Sorbensuspension über das Füllrohr eingebracht; dabei ist Ventil (18) geschlossen, während Ventil (19) geöffnet ist, damit der Eluent aus der Supension durch das untere Filterelement (12) zurück in die Vorlage (1) und/oder (3) fließen kann. Nachdem das gesamte Sorbens eingefüllt ist, wird zunächst Eluent aus der Vorlage (3) durch die Säule gepumpt, dann wird der Kompressionskolben auf die Sorbenspackung gesenkt und die Packung durch zusätzlichen mechanischen Druck stabilisiert. Der Kompressionskolben verbleibt auf der Packung.

Sollte es sich herausstellen, daß die gewünschte Länge für das Sorbensbett noch nicht erreicht ist, so kann der Kompressionskolben wieder gehoben werden, und weitere Sorbenssuspension zugeführt werden.

Wegen des kompakten Aufbaues der erfindungsgemäßen Einrichtung kann die gefüllte Säule im Füllstand für chromatographische Trennungen benutzt werden. Das umständliche Hantieren und Bewegen der unter Umständen sehr schweren Säule entfällt somit. Dazu werden die Ventile (16) und (20) so eingestellt, daß eine Verbindung (22) zur Probeneinführung und zum Elutionsmittelvorrat entsteht, und daß weiterhin eine Verbindung (21) zur Sammelvorrichtung für das Eluat entsteht. Vorrichtungen für Probeneinführung, Elutionsmittelzuführung und Eluatsammlung sind dem Fachmann bekannt.

Diese besonders bevorzugte Verfahren hat weiterhin den Vorteil, daß das Befüllen der Säulen in einer geschlossenen Apparatur erfolgt, und daß dadurch z.B. die Arbeitsplatzexposition mit Lösungsmitteldämpfen und Sorbensstäuben erheblich verringert wird.

Durch das erfindungsgemäße Verfahren werden in der erfindungsgemäßen Apparatur Chromatographiesäulen befüllt, die eine homogenere Packungsdichte und eine höhere Reproduzierbarkeit der Säulenpackungsqualität aufweisen als nach herkömmlichen Verfahren befüllte Säulen. Da die Sorbenssuspensionsdichte in einem weiten Bereich variiert werden kann, ist die Verfüllbarkeit von Sorbensmaterialien mit unterschiedlichsten Korngrößen möglich. Da die Suspension kontinuierlich zugeführt wird, können auch große Chromatographiesäulen mit hohen Packungslängen befüllt werden. Dem erfindungsgemäßen Verfahren und der erfindungsgemäßen Apparatur kommen daher eine erhebliche wirtschaftliche Bedeutung zu.

Neben dem eingehend beschriebenen bevorzugten Ausgestaltungen der Erfindung werden dem Fachmann aufgrund der Lehre dieser Anmeldung ohne weiteres äquivalente Lösungen zugänglich sein.

Die folgenden Beispiele sollen die Erfindung erläutern, ohne sie jedoch zu begrenzen.

**Beispiele**

Beispiel 1

In einer Vorrichtung nach Figur 1 wird eine Säule mit einer Länge von 600 mm und einem inneren Durchmesser von 200 mm befüllt, wobei als Sorbens LiChroprep[R] Si 60 mit einer Korngröße von 25 $\mu$m bis 40 $\mu$m (Verkaufsprodukt von E. Merck, Darmstadt, Deutschland) und als Eluent n-Propanol verwendet wird. Die Suspensionsdichte beträgt 0,1 g/ml und die Dosiergeschwindigkeit ist 8,5 l Suspension/min (entsprechend einer linearen Fließgeschwindigkeit von 25 cm/min). Die Säule wird bei einem Druck von maximal 150 bar befüllt. Der Eluent wird nach Durchströmen der Säule über Ventile in die Eluentenvorlage zurückgeführt.

Beispiel 2

In einer Vorrichtung nach Figur 2 wird eine Säule mit einer Länge von 600 mm und einem inneren Durchmesser von 200 mm befüllt, wobei als Sorbens LiChroprep[R] Si 60 mit einer Korngröße von 25 $\mu$m bis 40 $\mu$m (Verkaufsprodukt von E. Merck, Darmstadt, Deutschland) und als Eluent n-Propanol verwendet wird. Die Suspensionsdichte beträgt 0,1 g/ml und die Dosiergeschwindigkeit ist 8,5 l Suspension/min. Die Säule wird bei einem Druck von maximal 150 bar befüllt. Der Eluent wird nach Durchströmen der Säule über Ventile in die Eluentenvorlage zurückgeführt

Nachdem das gesamte Sorbens eingefüllt ist, werden zunächst 50 l Eluent aus der Vorlage (3) durch die Säule gepumpt, dann wird der Kompressionskolben auf die Sorbenspackung gesenkt und die Packung durch zusätzlichen mechanischen Druck bei 150 bar stabilisiert. Der Kompressionskolben verbleibt auf der Packung.

Beispiel 3

In einer Vorrichtung nach Figur 2 wird eine Säule mit einer Länge von 600 mm und einem inneren Durchmesser von 200 mm befüllt, wobei als Sorbens LiChroprep[R] Si 60 mit einer Korngröße von 25 $\mu$m bis 40 $\mu$m (Verkaufsprodukt von E. Merck, Darmstadt, Deutschland) und als Eluent n-Propanol verwendet wird. Zunächst werden aus Vorlage (1) 20 l einer konzentrierten Suspension (0,45 g/ml) in die Säule eingefüllt. Anschließend wird beim weiteren Befüllen aus Vorlage (3) Eluent zugefügt, so daß die Suspensionsdichte beim Einströmen in die Säule 0,1 g/ml beträgt. Die Dosiergeschwindigkeit beträgt dabei 8,5 l Suspension/min. Die Säule wird bei einem Druck von maximal 150 bar befüllt. Der Eluent wird nach Durchströmen der Säule über Ventile in die Eluentenvorlage zurückgeführt.

Nachdem das gesamte Sorbens eingefüllt ist, werden zunächst 50 l Eluent aus der Vorlage (3) durch die Säule gepumpt, dann wird der Kompressionskolben auf die Sorbenspackung gesenkt und die Packung durch zusätzlichen mechanischen Druck bei 150 bar stabilisiert. Der Kompressionskolben verbleibt auf der Packung.

**Patentansprüche**

1. Verfahren zur Befüllung von Chromatographiesäulen, wobei das Sorbens in einem Eluenten suspendiert in die Säule eingebracht und durch Druckfiltration verdichtet wird, dadurch gekennzeichnet, daß die Sorbenssuspension kontinuierlich in die Säule eingebracht wird, und daß die Viskosität und die Dichte der Sorbenssuspension durch die Zudosierung eines Eluenten variiert werden kann.

2. Verfahren nach Anspruch 1, dadurch gekennzeichnet, daß die Suspension durch eine oder mehrere periphere Öffnungen des Füllrohres zugeführt wird.

3. Vorrichtung zur Naßbefüllung von Chromatographiesäulen durch Druckfiltration einer Sorbenssuspension, mindestens enthaltend je eine Vorlage mit Auslaßventil ((4) und (5)) für Sorbenssuspension (1) und für Elutionsmittel (3), eine Mischvorrichtung (2), eine Pumpe (6) zur Förderung der Sorbenssuspension, sowie die zu füllende Säule (10).

4. Vorrichtung nach Anspruch 3, dadurch gekennzeichnet, daß die Öffnung oder die Öffnungen für die Zuführung der Sorbenssuspension peripher am Füllrohr angebracht ist/sind.

5. Chromatographiesäule, gefüllt nach einem Verfahren nach Anspruch 1 oder 2.

Fig. 1

Fig. 2

Fig. 3